# EUROPÄISCHE PATENTANMELDUNG

(11) **EP 3 918 961 A1**
(43) Veröffentlichungstag der Anmeldung: **08.12.2021**
(21) Anmeldenummer: 21176620.9
(22) Anmeldetag: 28.05.2021
(51) Int. Cl.: A47J 36/32, A47J 45/06, A47J 36/06

(54) **ZUSATZMODUL**

(30) Priorität: 03.06.2020 EP 20382475
(71) Anmelder: BSH Hausgeräte GmbH, 81739 München (DE)
(72) Erfinder: Bode, Sophie, 81547 München (DE); Camañes Vera, Victor, 50003 Zaragoza (ES); Dudarenka, Alena, 80797 München (DE); Dziebowski, Sabine, 81541 München (DE); Mir Bel, Jorge, 50019 Zaragoza (ES); Parra Borderías, Maria, 50006 Zaragoza (ES); Rodriguez Larrosa, Agostina, 50011 Zaragoza (ES); Valeau Martin, David, 50009 Zaragoza (ES); Villanueva Valero, Beatriz, 50011 Zaragoza (ES)

(57) **Zusammenfassung**

Die Erfindung geht aus von einem Zusatzmodul (10a-c), welches zur Anbringung an ein Lebensmittelbearbeitungsgeschirr (12a; 12c), insbesondere ein Gargeschirr, vorgesehen ist, mit einer Funktionseinheit (14a-c) zur Bereitstellung zumindest einer Funktion.

Um eine Flexibilität zu verbessern wird vorgeschlagen, dass zumindest eine Anschlusseinheit (16a-c), welche zu einem Anschluss zumindest eines weiteren Zusatzmoduls (18a-c), welches insbesondere eine weitere Funktionseinheit (20a-c) zur Bereitstellung zumindest einer weiteren Funktion aufweist, vorgesehen ist.

## Beschreibung

Die Erfindung betrifft ein Zusatzmodul, welches zur Anbringung an ein Lebensmittelbearbeitungsgeschirr vorgesehen ist, nach dem Oberbegriff des Anspruchs 1.

Aus dem Stand der Technik sind bereits Zusatzmodule zur Anbringung an ein Lebensmittelbearbeitungsgeschirr, beispielsweise Temperatursensormodule oder Rührmodule zur Anbringung an einen Topf, bekannt. Bekannte Zusatzmodule sind dabei nicht aneinander anschließbar, was eine Flexibilität für einen Nutzer bei einer Lebensmittelzubereitung, insbesondere bei einem gleichzeitigen Einsatz mehrerer Zusatzmodule mit unterschiedlichen Funktionen, einschränkt.

Die Aufgabe der Erfindung besteht insbesondere, aber nicht beschränkt darauf, darin, ein gattungsgemäßes Zusatzmodul mit verbesserten Eigenschaften hinsichtlich einer Flexibilität bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Zusatzmodul, welches zur Anbringung an ein Lebensmittelbearbeitungsgeschirr, insbesondere ein Gargeschirr, vorgesehen ist, mit einer Funktionseinheit zur Bereitstellung zumindest einer Funktion.

Es wird vorgeschlagen, dass das Zusatzmodul zumindest eine Anschlusseinheit, welche zu einem Anschluss zumindest eines weiteren Zusatzmoduls, welches insbesondere eine weitere Funktionseinheit zur Bereitstellung zumindest einer weiteren Funktion aufweist, vorgesehen ist, aufweist.

Durch eine derartige Ausgestaltung kann vorteilhaft eine Flexibilität erhöht werden. Durch die Anschlusseinheit sind das Zusatzmodul und das weitere Zusatzmodul besonders einfach und flexibel aneinander anschließbar. Ein Nutzer kann so vorteilhaft unterschiedliche Zusatzmodule gleichzeitig verwenden und diese besonders einfach, flexibel und je nach Bedarf miteinander kombinieren. Das Zusatzmodul und das weitere Zusatzmodul können vorteilhaft aufeinander abgestimmt werden. Hierdurch kann vorteilhaft ein Bedienkomfort und/oder ein Bedienerlebnis für einen Nutzer verbessert werden. Zudem kann vorteilhaft eine Platzersparnis erreicht werden, beispielsweise indem die Zusatzmodule bestimmte Einheiten, z.B. einen Energiespeicher oder eine Ausgabeeinheit, gemeinsam nutzen. Des Weiteren kann eine Energieersparnis und somit eine Kostenersparnis für einen Nutzer erreicht werden, indem insbesondere Zusatzmodule mit energieintensiven Funktionseinheiten, beispielsweise Rühreinheiten, besonders einfach und flexibel, je nach Bedarf, an-und abgekoppelt werden können. Ferner kann vorteilhaft ein optisches Erscheinungsbild verbessert werden, indem einzelne Zusatzmodule in einem zusammenpassenden funktionalen Design bereitgestellt werden können.

Unter einem "Lebensmittelbearbeitungsgeschirr" soll eine Einheit verstanden werden, welche insbesondere zumindest einen Lebensmittelaufnahmeraum zu einer Aufnahme und Bearbeitung zumindest eines Lebensmittels wenigstens teilweise definiert und/oder begrenzt. Das Lebensmittelbearbeitungsgeschirr kann als ein Gargeschirr ausgebildet und beispielsweise zu einer Beheizung durch zumindest eine Heizeinheit, insbesondere zumindest eines Garsystems und/oder zumindest eines Gargeräts, vorgesehen sein. Das Gargeschirr kann dazu vorgesehen sein, mittels einer durch die Beheizung aufgenommenen Energie zumindest ein in dem Lebensmittelaufnahmeraum angeordnetes Lebensmittel zu erhitzen und/oder zu garen und/oder warmzuhalten. Beispielsweise könnte das Gargeschirr zu einem Einbringen in zumindest einen Garraum, insbesondere eines als Ofen ausgebildeten Gargeräts, vorgesehen sein. Vorzugsweise ist das Gargeschirr zu einem Aufstellen auf zumindest einer Aufstellplatte, insbesondere zum Zweck einer Beheizung, vorgesehen. Das Gargeschirr könnte beispielsweise zumindest einen Topf und/oder zumindest eine Pfanne und/oder zumindest ein Backblech aufweisen. Alternativ oder zusätzlich könnte das Lebensmittelbearbeitungsgeschirr als ein von einem Gargeschirr verschiedenes Geschirr ausgebildet, und insbesondere nicht zu einer Beheizung vorgesehen, sein. Beispielsweise könnte das Lebensmittelbearbeitungsgeschirr als eine Rührschüssel und/oder als ein Mixbecher und/oder als ein sonstiges Geschirr mit zumindest einem Lebensmittelaufnahmeraum ausgebildet sein. Unter der Wendung, dass ein Objekt den Lebensmittelaufnahmeraum "wenigstens teilweise" begrenzt, soll verstanden werden, dass das Objekt den Lebensmittelaufnahmeraum alleine oder gemeinsam mit zumindest einem weiteren Objekt begrenzt. Das Objekt und/oder das weitere Objekt könnte beispielsweise das Lebensmittelbearbeitungsgeschirr und/oder zumindest ein Deckel des Lebensmittelbearbeitungsgeschirrs und/oder zumindest eine Gehäuseeinheit, insbesondere der Lebensmittelbearbeitungsvorrichtung, sein.

Vorzugsweise ist das Zusatzmodul zu einer Anbringung an verschiedene Lebensmittelbearbeitungsgeschirre vorgesehen. Beispielsweise könnte das Zusatzmodul zu einer Anbringung an verschiedene Töpfe mit jeweils unterschiedlicher Größe vorgesehen sein. Vorzugsweise handelt es sich bei der Anbringung des Zusatzmoduls an das Lebensmittelbearbeitungsgeschirr um eine lösbare, temporäre, Verbindung. Die Anbringung könnte beispielsweise durch eine form- und/oder kraftschlüssige Verbindung, beispielsweise durch eine Steckverbindung und/oder eine Rastverbindung und/oder eine Schraubverbindung und/oder dergleichen, ausgebildet sein. In einer bevorzugten Ausgestaltung handelt es sich bei der Anbringung des Zusatzmoduls um eine magnetische Verbindung, mittels zumindest eines magnetischen Elements des Zusatzmoduls. Alternativ wäre denkbar, dass das Zusatzmodul fest an das Lebensmittelbearbeitungsgeschirr angebracht und/oder in einem Element des Lebensmittelbearbeitungsgeschirrs integriert ist.

Die Funktionseinheit und/oder die weitere Funktionseinheit könnte beispielsweise eine Sensoreinheit mit zumindest einem Sensorelement aufweisen. Das Sensorelement könnte beispielsweise als ein Temperatursensor oder als ein Gewichtssensor oder als ein Volumensensor oder als ein Feuchtigkeitssensor ausgebildet sein. Es sind verschiedene weitere, dem Fachmann als sinnvoll erscheinende Sensorelemente denkbar. Alternativ oder zusätzlich wäre denkbar, dass die Funktionseinheit zumindest eine Rühreinheit aufweist, welche zu einem Rühren eines in dem Lebensmittelbearbeitungsgeschirr befindlichen Lebensmittels vorgesehen ist. Ferner könnte die Funktionseinheit eine Assistenzeinheit aufweisen, welche dazu vorgesehen ist, einem Nutzer bei einer Lebensmittelbearbeitung zu assistieren. Die Assistenzeinheit könnte beispielsweise Kochrezepte und Anleitungen zu einer Durchführung der Kochrezepte bereitstellen. Es wäre zudem denkbar, dass die Funktionseinheit eine Steuereinheit aufweist. Die Steuereinheit könnte vorzugsweise als eine zentrale Steuereinheit ausgebildet sein und zu einer zentralen Steuerung von Funktionen der Funktionseinheit und/oder der weiteren Funktionseinheit des weiteren Zusatzmoduls und/oder Funktionen von externen Einheiten vorgesehen sein. Beispielsweise wäre denkbar, dass die zentrale Steuereinheit zu einer gleichzeitigen Steuerung einer Funktion, beispielsweise einer Rührfunktion, der Funktionseinheit und einer Haushaltsgerätefunktion einer als ein Haushaltsgerät ausgebildeten externen Einheit, beispielsweise einer Steuerung einer Heizleistung eines Kochfelds, bei einem gleichzeitigen Einsatz mit dem Zusatzmodul bei einer Lebensmittelbearbeitung, vorgesehen ist.

Zudem wird vorgeschlagen, dass die Anschlusseinheit zumindest ein elektrisch leitfähiges Anschlusselement aufweist. Durch eine derartige Ausgestaltung kann vorteilhaft eine elektrisch leitende Verbindung zwischen dem Zusatzmodul und dem weiteren Zusatzmodul ermöglicht und eine Konnektivität zwischen dem Zusatzmodul und dem weiteren Zusatzmodul verbessert werden. Das elektrisch leitfähige Anschlusselement kann dazu vorgesehen sein, mit einem elektrisch leitfähigen Gegenanschlusselement des weiteren Zusatzmoduls zu korrespondieren. Beispielsweise könnte das elektrisch leitfähige Anschlusselement als ein Stecker ausgebildet sein, welcher mit einem als eine Dose ausgebildeten elektrisch leitfähigen Gegenanschlusselement korrespondiert. Vorzugsweise weist das weitere Zusatzmodul eine weitere Anschlusseinheit zu einem Anschluss eines weiteren Zusatzmoduls auf. Die weitere Anschlusseinheit weist vorzugsweise ein weiteres elektrisch leitendes Anschlusselement und/oder ein weiteres elektrisch leitendes Gegenanschlusselement auf.

Ferner wird vorgeschlagen, dass das elektrisch leitfähige Anschlusselement zu einer Energieübertragung vorgesehen ist. Hierdurch können vorteilhaft das Zusatzmodul und das weitere Zusatzmodul mittels derselben Energiequelle betrieben werden. Durch eine derartige Ausgestaltung kann vorteilhaft eine besonders kompakte Bauweise des Zusatzmoduls oder des weiteren Zusatzmoduls erreicht werden. Es wäre beispielsweise denkbar, dass das Zusatzmodul zumindest einen Energiespeicher, beispielsweise einen Akkumulator oder dergleichen, aufweist. Vorzugsweise ist der Energiespeicher mittels der Energieübertragung über das elektrisch leitfähige Anschlusselement, beispielsweise mittels eines entsprechenden mit dem elektrisch leitfähigen Anschlusselement verbindbaren Ladekabel, aufladbar. Der Energiespeicher könnte in einem Betriebszustand zumindest einen Teil einer gespeicherten Energie für die weitere Funktionseinheit des weiteren Zusatzmoduls bereithalten und diese über das elektrisch leitfähige Anschlusselement an das weitere Zusatzmodul übertragen. Es wäre auch denkbar, dass das weitere Zusatzmodul einen Energiespeicher aufweist und beispielsweise dazu vorgesehen ist, eine Energieversorgung der Funktionseinheit des Zusatzmoduls bereitzustellen und/oder zu erweitern. Hierdurch könnte vorteilhaft eine Betriebszeit der durch die Funktionseinheit bereitgestellten Funktion durch das weitere Zusatzmodul verlängert werden, ähnlich wie dies beispielsweise durch so genannte "Powerbanks" für mobile Geräte wie Smartphones ermöglicht wird.

Darüber hinaus wird vorgeschlagen, dass das elektrisch leitfähige Anschlusselement zu einer Datenübertragung vorgesehen ist. Hierdurch kann vorteilhaft eine Datenübertragung zwischen dem Zusatzmodul und dem weiteren Zusatzmodul mit einfachen technischen Mitteln ermöglicht werden. Das elektrisch leitfähige Anschlusselement könnte ausschließlich zu einer Datenübertragung vorgesehen sein. Vorzugsweise ist das elektrisch leitfähige Anschlusselement jedoch zu einer Energieübertragung und zu einer Datenübertragung vorgesehen. Es wäre denkbar, dass das elektrisch leitfähige Anschlusselement zu einer unidirektionalen Datenübertragung zwischen dem Zusatzmodul und dem weiteren Zusatzmodul vorgesehen ist. Beispielsweise wäre denkbar, dass das weitere Zusatzmodul eine weitere Funktionseinheit aufweist, welche als eine Sensoreinheit ausgebildet ist und zumindest eine Sensorfunktion, beispielsweise eine Temperaturmessung, bereitstellt und von der Sensoreinheit ermittelte Sensordaten mittels des elektrisch leitfähigen Anschlusselements unidirektional von dem weiteren Zusatzmodul auf das Zusatzmodul übertragbar sind. Vorzugsweise ist das elektrisch leitfähige Anschlusselement zu einer bidirektionalen Datenübertragung zwischen dem Zusatzmodul und dem weiteren Zusatzmodul vorgesehen. Beispielsweise wäre denkbar, dass das elektrisch leitfähige Anschlusselement zu einer bidirektionalen Datenübertragung vorgesehen ist, welche zumindest eine erste Datenübertragung von dem weiteren Zusatzmodul auf das Zusatzmodul, beispielsweise eine Übertragung eines Datensatzes von mittels der weiteren Funktionseinheit ermittelten Sensordaten, und zumindest eine zweite Datenübertragung von dem Zusatzmodul auf das weitere Zusatzmodul, beispielsweise eine Information bezüglich eines Ladezustands eines in dem Zusatzmodul befindlichen Energiespeichers, beinhaltet. Die erste Datenübertragung und die zweite Datenübertragung könnten dabei zeitgleich erfolgen. Alternativ wäre denkbar, dass die erste Datenübertragung und die zweite Datenübertragung einander zeitlich vor- beziehungsweise nachgelagert sind.

Des Weiteren wird vorgeschlagen, dass die Anschlusseinheit zumindest ein mechanisches Anschlusselement zu einer mechanischen Anbindung des weiteren Zusatzmoduls aufweist. Hierdurch kann vorteilhaft der Anschluss des weiteren Zusatzmoduls an das Zusatzmodul mit besonders einfachen technischen Mitteln ermöglicht werden. Das mechanische Anschlusselement kann zu der mechanischen Anbindung des weiteren Zusatzmoduls mit einem mechanischen Gegenanschlusselement des weiteren Zusatzmoduls vorgesehen sein. Es wäre beispielsweise denkbar, dass die mechanische Anbindung mittels einer Steckverbindung und/oder mittels einer Rastverbindung erfolgen kann und das mechanische Anschlusselement beispielsweise als ein Stecker und das mechanische Gegenanschlusselement beispielsweise als eine mit dem Stecker korrespondierende Dose ausgebildet ist. Alternativ könnte eine mechanische Anbindung des weiteren Zusatzmoduls durch das mechanische Anschlusselement mittels einer weiteren form- und oder kraftschlüssigen Verbindung, beispielsweise mittels einer Schraubverbindung und/oder mittels einer Spannverbindung oder dergleichen vorgesehen sein. Vorzugsweise fungiert das elektrisch leitfähige Anschlusselement zugleich als das mechanische Anschlusselement und ist neben der Energieübertragung und/oder der Datenübertragung zu der mechanischen Anbindung des weiteren Zusatzmoduls vorgesehen.

In einer alternativen vorteilhaften Ausgestaltung wird vorgeschlagen, dass die Anschlusseinheit zumindest ein magnetisches Anschlusselement zu einer magnetischen Anbindung des weiteren Zusatzmoduls aufweist. Durch eine derartige Ausgestaltung kann vorteilhaft eine besonders einfache und für einen Nutzer daher besonders komfortable Anbindung des weiteren Zusatzmoduls an das Zusatzmodul ermöglicht werden. Das magnetische Anschlusselement könnte beispielsweise als ein Permanentmagnet ausgebildet sein. Vorzugsweise weist das weitere Zusatzmodul ein magnetisches Gegenanschlusselement auf. Das magnetische Gegenanschlusselement könnte beispielsweise als ein weiterer Permanentmagnet ausgebildet sein. Alternativ wäre denkbar, dass das magnetische Gegenanschlusselement als ein magnetisches Teilstück des weiteren Zusatzmoduls, beispielsweise als ein ferromagnetisches Teilstück aus einem ferromagnetischen Metall, ausgebildet ist. Vorzugsweise ist das magnetische Anschlusselement, neben der magnetischen Anbindung des weiteren Zusatzmoduls, zu einer magnetischen Anbindung an magnetisches Lebensmittelbearbeitungsgeschirr, insbesondere an ein metallisches Gargeschirr, vorgesehen.

Zudem wird vorgeschlagen, dass das Zusatzmodul eine Datenübertragungseinheit zu einer drahtlosen Datenübertragung mit dem zumindest einen weiteren Zusatzmodul aufweist. Hierdurch kann eine besonders flexible Datenübertragung zwischen dem Zusatzmodul und dem weiteren Zusatzmodul und damit einhergehend ein besonders hoher Bedienkomfort und/oder ein besonders zufriedenstellendes Bedienerlebnis für einen Nutzer erreicht werden. Die Datenübertragungseinheit könnte zu einer unidirektionalen Datenübertragung zwischen dem Zusatzmodul und dem weiteren Zusatzmodul vorgesehen sein. Beispielsweise könnte die Datenübertragungseinheit ein Empfängerelement, welches an dem Zusatzmodul angeordnet ist, und ein Sendelement, welches an dem weiteren Zusatzmodul angeordnet ist, umfassen und zu einer unidirektionalen drahtlosen Datenübertragung von dem weiteren Zusatzmodul auf das Zusatzmodul vorgesehen sein. Vorzugsweise ist die Datenübertragungseinheit zu einer bidirektionalen drahtlosen Datenübertragung zwischen dem Zusatzmodul und dem weiteren Zusatzmodul vorgesehen und weist zumindest ein Empfängerelement und zumindest ein Sendelement auf. Vorzugsweise weist das weitere Zusatzmodul zu der bidirektionalen Datenübertragung eine weitere Datenübertragungseinheit mit zumindest einem weiteren Empfängerelement und mit zumindest einem weiteren Sendelement auf. Die drahtlose Datenübertragung könnte beispielsweise nach dem Bluetooth-Standard, dem Wireless-Lan-Standard, dem Z-Wave-Standard, dem Zig-Bee-Standard oder einem anderen, einem Fachmann für eine Datenübertragung als sinnvoll erscheinenden Funkstandard erfolgen. Vorzugsweise ist die Datenübertragungseinheit, neben der Datenübertragung zwischen dem Zusatzmodul und dem weiteren Zusatzmodul, zu einer Datenübertragung mit zumindest einer externen Einheit, beispielsweise mit einem Haushaltsgerät und/oder einem Endgerät eines Nutzers, wie etwa einem Smartphone und/oder einer Smartwatch und/oder einem Tablet und/oder einem Laptop oder dergleichen, vorgesehen. Hierdurch kann vorteilhaft eine Flexibilität und/oder ein Bedienkomfort für einen Nutzer weiter verbessert werden.

Des Weiteren wird vorgeschlagen, dass die Funktionseinheit als eine Unterstützungseinheit zu einer Unterstützung des zumindest einen weiteren Zusatzmoduls ausgebildet ist. Hierdurch kann vorteilhaft eine besonders kompakte Bauweise des weiteren Zusatzmoduls erreicht werden. Beispielsweise wäre denkbar, dass das Zusatzmodul zu der Unterstützung des weiteren Zusatzmoduls eine als Unterstützungseinheit ausgebildete Funktionseinheit aufweist, welche einen Energiespeicher zu einer Energieversorgung des weiteren Zusatzmoduls umfasst. Alternativ oder zusätzlich könnte die als Unterstützungseinheit ausgebildete Funktionseinheit des Zusatzmoduls beispielsweise eine Steuereinheit zu einer Steuerung des weiteren Zusatzmoduls und/oder Speichereinheit zu einer Speicherung von mittels der weiteren Funktionseinheit des weiteren Zusatzmoduls ermittelten Daten, beispielsweise Sensordaten, und/oder eine Ausgabeeinheit zu einer Ausgabe der Daten aufweisen.

Ferner wird ein Zusatzmodul vorgeschlagen, welches in einem Lebensmittelbearbeitungsgeschirrgriff, insbesondere einem Gargeschirrgriff, integriert ist. Hierdurch kann vorteilhaft ein besonders kompaktes und vielseitiges Zusatzmodul bereitgestellt werden. Zudem kann vorteilhaft ein optisches Erscheinungsbild des Zusatzmoduls verbessert werden. Vorzugsweise handelt es sich bei dem Lebensmittelbearbeitungsgriff, in welchen das Zusatzmodul integriert ist, um einen von dem Lebensmittelbearbeitungsgeschirr abnehmbaren Griff. Hierdurch kann vorteilhaft eine Funktionalität und/oder ein Bedienkomfort für einen Nutzer verbessert werden. Beispielsweise ist denkbar, dass der Lebensmittelbearbeitungsgeschirrgriff, in welchen das Zusatzmodul integriert ist, zum Zwecke einer Reinigung des Lebensmittelbearbeitungsgeschirrs, beispielsweise in einer Spülmaschine, und/oder zum Zwecke einer verbesserten Verstauung an einem Aufbewahrungsort, abnehmbar ist.

In einer weiteren vorteilhaften Ausgestaltung wird ein Zusatzmodul vorgeschlagen, welches in einem Lebensmittelbearbeitungsgeschirrdeckel, insbesondere einem Gargeschirrdeckel, integriert ist. Hierdurch kann vorteilhaft eine weitere Möglichkeit eines besonders kompakten und vielseitigen Zusatzmoduls bereitgestellt werden. Zudem kann vorteilhaft ein optisches Erscheinungsbild des Zusatzmoduls verbessert werden. Das Zusatzmodul kann vorzugsweise in einem äußeren Ring des Lebensmittelbearbeitungsgeschirrdeckels integriert sein. In diesem Fall kann vorteilhaft ein besonders flexibler Anschluss des weiteren Zusatzmoduls an dem in dem Lebensmittelbearbeitungsgeschirrdeckel integrierten Zusatzmodul mittels der Anschlusseinheit, insbesondere im Falle einer Anschlusseinheit, welche zumindest ein magnetisches Anschlusselement aufweist, über einen gesamten Umfang des Lebensmittelbearbeitungsgeschirrdeckels ermöglicht werden.

Die Erfindung betrifft ferner ein System mit einem erfindungsgemäßen Zusatzmodul und mit dem weiteren Zusatzmodul, welches eine weitere Funktionseinheit zur Bereitstellung zumindest einer weiteren Funktion aufweist. Durch ein derartiges System kann einem Nutzer, durch die Funktionseinheit und die weitere Funktionseinheit, ein besonders großer Funktionsumfang bereitgestellt werden. Vorzugsweise ist das System durch eine Vielzahl an unterschiedlichen weiteren Zusatzmodulen, welche jeweils weitere Funktionseinheiten zur Bereitstellung weiterer voneinander unterschiedlicher und/oder einander ergänzender Funktionen umfassen, erweiterbar. Hierdurch kann einem Nutzer vorteilhaft ein auf individuelle Bedürfnisse abgestimmtes System bereitgestellt werden. Zudem kann vorteilhaft ein gewünschter Funktionsumfang individuell erweitert werden. Ferner können vorteilhaft technische Weiterentwicklungen und/oder neue Entwicklungen von Funktionseinheiten besonders einfach und flexibel in das System integriert werden, wodurch ein Bedienerlebnis für einen Nutzer weiter gesteigert werden kann.

Zudem wird ein System mit einem Lebensmittelbearbeitungsgeschirr, an welchem zumindest das Zusatzmodul befestigt ist, vorgeschlagen. Ein derartiges System ist vorzugsweise als ein Basissystem vorgesehen und stellt mit dem Lebensmittelbearbeitungsgeschirr und der durch die Funktionseinheit des Zusatzmoduls bereitgestellten Funktion zunächst eine Grundausstattung für einen Nutzer bereit, welcher das System vorteilhaft individuell um weitere Zusatzmodule mit weiteren Funktionen ergänzen kann. Hierdurch kann zudem vorteilhaft ein besonders preiswertes System für Einsteiger bereitgestellt werden, welche dieses, insbesondere zu späteren Zeitpunkten, um weitere Zusatzmodule ergänzen können.

Das Zusatzmodul soll hierbei nicht auf die oben beschriebene Anwendung und Ausführungsform beschränkt sein. Insbesondere kann das Zusatzmodul zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Systems mit einem Lebensmittelbearbeitungsgeschirr, einem an dem Lebensmittelbearbeitungsgeschirr befestigten Zusatzmodul und mit einem weiteren Zusatzmodul,
- Fig. 2: eine schematische Darstellung des Zusatzmoduls mit einer Funktionseinheit und einer Anschlusseinheit zu einem Anschluss des weiteren Zusatzmoduls mit einer weiteren Funktionseinheit,
- Fig. 3: ein weiteres Ausführungsbeispiel eines Zusatzmoduls und ein weiteres Zusatzmodul in einer schematischen Darstellung und
- Fig. 4: ein weiteres Ausführungsbeispiel eines Systems mit einem Zusatzmodul, welches in einen Gargeschirrdeckel eines Lebensmittelbearbeitungsgeschirrs integriert ist.

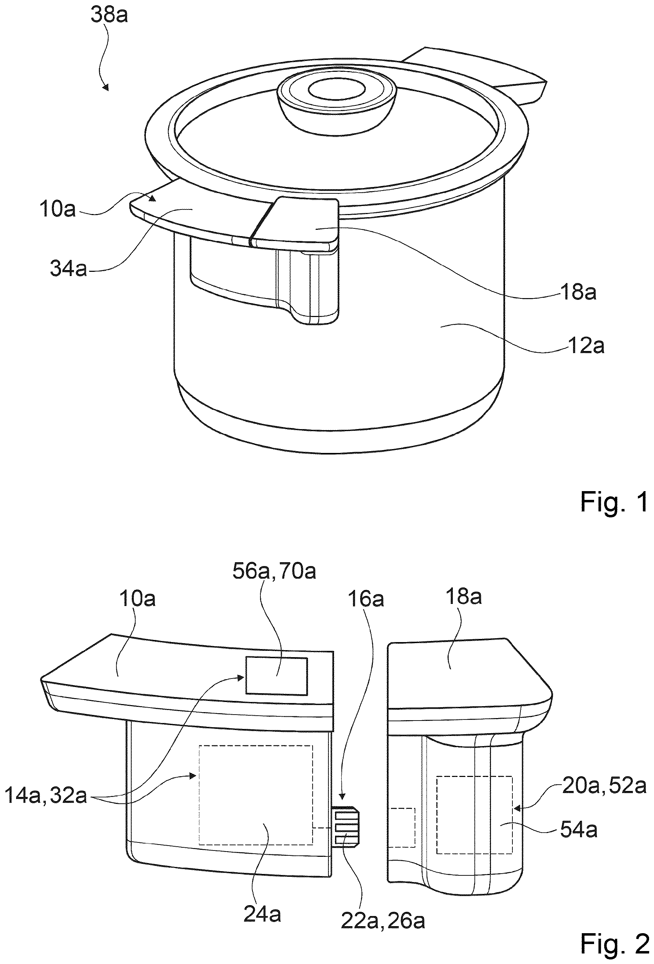

Figur 1 zeigt ein System 38a mit einem Lebensmittelbearbeitungsgeschirr 12a, mit einem Zusatzmodul 10a und einem weiteren Zusatzmodul 18a in einer schematischen Darstellung. Das Zusatzmodul 10a ist zu einer Anbringung an das Lebensmittelbearbeitungsgeschirr 12a vorgesehen. Das Zusatzmodul 10a ist in einen Lebensmittelbearbeitungsgeschirrgriff 34a integriert. Der Lebensmittelbearbeitungsgeschirrgriff 34a ist mittels eines Rastmechanismus (nicht dargestellt) lösbar mit dem Lebensmittelbearbeitungsgeschirr 12a verbunden.

Figur 2 zeigt das Zusatzmodul 10a und das weitere Zusatzmodul 18a. Das Zusatzmodul 10a umfasst eine Funktionseinheit 14a zur Bereitstellung zumindest einer Funktion.

Das Zusatzmodul 10a weist eine Anschlusseinheit 16a auf. Die Anschlusseinheit 16a ist zu einem Anschuss des weiteren Zusatzmoduls 18a vorgesehen.

Das weitere Zusatzmodul 18a weist eine weitere Funktionseinheit 20a auf. In dem vorliegenden Ausführungsbeispiel ist die weitere Funktionseinheit 20a des weiteren Zusatzmoduls als eine Sensoreinheit 52a ausgebildet. Die als Sensoreinheit 52a ausgebildete weitere Funktionseinheit 20a umfasst einen Temperatursensor 54a. Der Temperatursensor 54a ist zu einer Messung einer Temperatur in dem Lebensmittelbearbeitungsgeschirr 12a vorgesehen.

Die Anschlusseinheit 16a weist ein elektrisch leitfähiges Anschlusselement 22a auf. Das elektrisch leitfähige Anschlusselement 22a ist zu einer Energieübertragung vorgesehen. Die Funktionseinheit 14a weist einen Energiespeicher 24a auf. Die Funktionseinheit 14a ist als eine Unterstützungseinheit 32a zu einer Unterstützung des zumindest einen weiteren Zusatzmoduls 18a ausgebildet. Die als Unterstützungseinheit 32a ausgebildete Funktionseinheit 14a überträgt in einem Betriebszustand zu der Unterstützung des weiteren Zusatzmoduls 18a eine in dem Energiespeicher 24a gespeicherte elektrische Energie mittels des elektrisch leitfähigen Anschlusselements 22a auf das weitere Zusatzmodul 18a, um die weitere Funktionseinheit 20a mit der elektrischen Energie zu versorgen.

Das elektrisch leitfähige Anschlusselement 22a ist zu einer Datenübertragung vorgesehen. In einem Betriebszustand werden Daten zwischen dem Zusatzmodul 10a und dem weiteren Zusatzmodul 18a mittels des elektrisch leitfähigen Anschlusselements 22a übertragen.

Die Funktionseinheit 14a des Zusatzmoduls 10a umfasst eine Ausgabeeinheit 56a. Die Ausgabeeinheit 56a ist zur Ausgabe von Informationen vorgesehen und als ein Display 70a ausgebildet. In dem vorliegenden Ausführungsbeispiel gibt die Ausgabeeinheit 56a in einem Betriebszustand eine mittels des elektrisch leitfähigen Anschlusselements 22a von dem weiteren Zusatzmodul 18a auf das Zusatzmodul 10a übertragene Information aus. In dem vorliegenden Ausführungsbeispiel handelt es sich bei der Information um eine durch den Temperatursensor 54a der Sensoreinheit 52a des weiteren Zusatzmoduls 18a gemessene Temperatur.

Die Anschlusseinheit 16a weist ein mechanisches Anschlusselement 26a auf. Das mechanische Anschlusselement 26a ist zu einer mechanischen Anbindung des weiteren Zusatzmoduls 18a vorgesehen. In dem vorliegenden Ausführungsbeispiel ist das mechanische Anschlusselement 26a einstückig mit dem elektrisch leitfähigen Anschlusselement 22a ausgebildet.

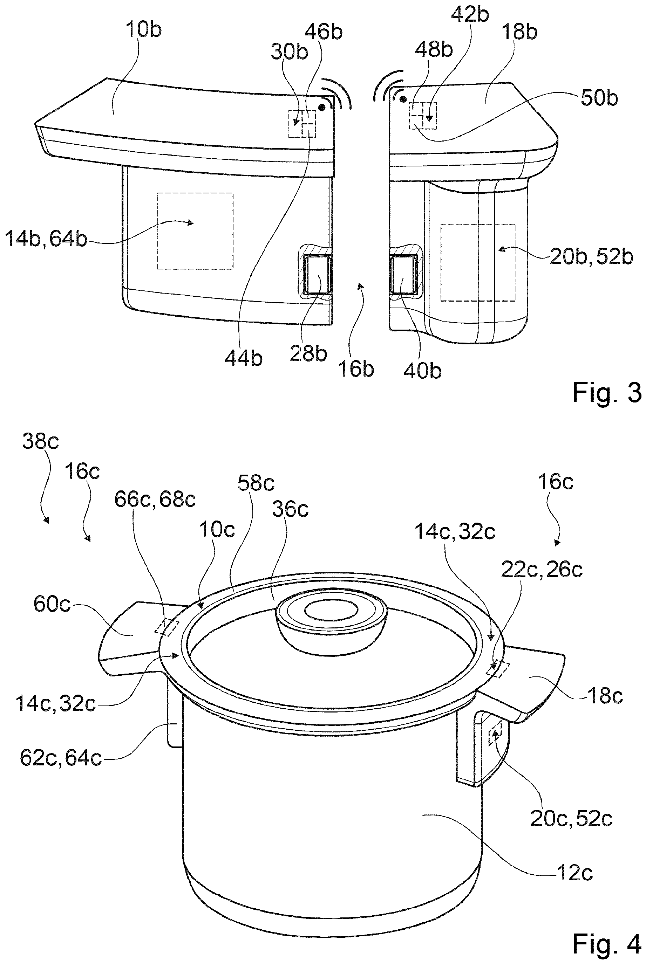

In Figuren 3 und 4 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 2 verwiesen werden kann. Zur Unterscheidung der Ausführungsbeispiele ist der Buchstabe a in den Bezugszeichen des Ausführungsbeispiels in den Figuren 1 bis 2 durch die Buchstaben b und c in den Bezugszeichen des Ausführungsbeispiels der Figuren 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 2 verwiesen werden.

Figur 3 zeigt ein weiteres Ausführungsbeispiel eines Zusatzmoduls 10b. Das Zusatzmodul 10b ist zu einer Anbringung an ein Lebensmittelbearbeitungsgeschirr (nicht dargestellt) vorgesehen. Das Zusatzmodul 10b umfasst eine Funktionseinheit 14b zur Bereitstellung zumindest einer Funktion. Die Funktionseinheit 14b umfasst eine Rühreinheit 64b zur Bereitstellung einer Rührfunktion.

Das Zusatzmodul 10b weist eine Anschlusseinheit 16b auf. Die Anschlusseinheit 16b ist zu einem Anschluss eines weiteren Zusatzmoduls 18b an das Zusatzmodul 10b vorgesehen. Das weitere Zusatzmodul 18b weist eine weitere Funktionseinheit 20b zur Bereitstellung einer weiteren Funktion auf. Die weitere Funktionseinheit 20b umfasst eine Sensoreinheit 52b und stellt eine Sensorfunktion bereit.

Die Anschlusseinheit 16b weist ein magnetisches Anschlusselement 28b zu einer magnetischen Anbindung des weiteren Zusatzmoduls 18b auf. Das magnetische Anschlusselement 28b ist als ein Permanentmagnet ausgebildet. Das weitere Zusatzmodul 18b weist ein magnetisches Gegenanschlusselement 40b auf. Das magnetische Gegenanschlusselement 40b ist als ein weiterer Permanentmagnet ausgebildet. Zu der magnetischen Anbindung des weiteren Zusatzmoduls 18b wird dieses in die Nähe des Zusatzmoduls 10b gebracht, sodass das magnetische Anschlusselement 28b und das magnetische Gegenanschlusselement 40b eine wechselseitige magnetische Anziehungskraft aufeinander ausüben.

Das Zusatzmodul 10b weist eine Datenübertragungseinheit 30b auf. Die Datenübertragungseinheit 30b ist zu einer drahtlosen Datenübertragung mit dem weiteren Zusatzmodul 18b vorgesehen. Die Datenübertragungseinheit 30b umfasst ein Sendelement 44b und ein Empfangselement 46b und ist zu einer bidirektionalen drahtlosen Datenübertragung mit dem weiteren Zusatzmodul 18b vorgesehen. Das weitere Zusatzmodul 18b weist zu der drahtlosen Datenübertragung mit dem Zusatzmodul 10b eine weitere Datenübertragungseinheit 42b auf. Die weitere Datenübertragungseinheit 42b umfasst ein weiteres Sendelement 48b und ein weiteres Empfangselement 50b und ist zu einer bidirektionalen drahtlosen Datenübertragung mit dem Zusatzmodul 10b vorgesehen. In dem vorliegenden Ausführungsbeispiel erfolgt die bidirektionale drahtlose Datenübertragung zwischen dem Zusatzmodul 10b und dem weiteren Zusatzmodul 18b per Bluetooth. In einem Betriebszustand überträgt die weitere Datenübertragungseinheit 42b des weiteren Zusatzmoduls 18b Sensordaten an die Datenübertragungseinheit 30b des Zusatzmoduls zu einer Optimierung der Rührfunktion der Funktionseinheit 14b.

Figur 4 zeigt ein weiteres Ausführungsbeispiel eines Systems 38c mit einem Zusatzmodul 10c. Das Zusatzmodul 10c ist in einem Lebensmittelbearbeitungsgeschirrdeckel 36c eines Lebensmittelbearbeitungsgeschirrs 12c integriert. Das Zusatzmodul 10c ist in einem äußeren Ring 58c des Lebensmittelbearbeitungsgeschirrdeckels 36c integriert.

Das Zusatzmodul 10c weist eine Funktionseinheit 14c auf. Die Funktionseinheit 14c ist als eine Unterstützungseinheit 32c zu einer Unterstützung zumindest eines weiteren Zusatzmoduls 18c vorgesehen. Das Zusatzmodul 10c weist eine Anschlusseinheit 16c zu einem Anschluss des zumindest eines weiteren Zusatzmoduls 18c auf. Das weitere Zusatzmodul 18c weist eine weitere Funktionseinheit 20c zur Bereitstellung zumindest einer weiteren Funktion auf. Die weitere Funktionseinheit 20c umfasst eine Sensoreinheit 52c und stellt eine Sensorfunktion bereit. Die Anschlusseinheit 16c umfasst ein elektrisch leitfähiges Anschlusselement 22c. Das elektrisch leitfähige Anschlusselement 22c ist zu einer Energieübertragung und zu einer Datenübertragung vorgesehen.

Die Anschlusseinheit 16c des Zusatzmoduls 10c ist zu einem Anschluss eines weiteren Zusatzmoduls 60c vorgesehen. Die Anschlusseinheit 16c umfasst ein weiteres mechanisches Anschlusselement 68c zu einer mechanischen Anbindung des weiteren Zusatzmoduls 60c. Die Anschlusseinheit 16c umfasst ein weiteres elektrisch leitfähiges Anschlusselement 66c zu einer Datenübertragung. Das weitere elektrisch leitfähige Anschlusselement 66c ist einstückig mit dem mechanischen Anschlusselement 68c ausgebildet. Das weitere Zusatzmodul 60c umfasst eine weitere Funktionseinheit 62c. Die weitere Funktionseinheit 62c umfasst eine Rühreinheit 64c zu einem Rühren von in dem Lebensmittelbearbeitungsgeschirr 12c befindlichen Lebensmitteln.

### Bezugszeichen

- 10: Zusatzmodul
- 12: Lebensmittelbearbeitungsgeschirr
- 14: Funktionseinheit
- 16: Anschlusseinheit
- 18: weiteres Zusatzmodul
- 20: weitere Funktionseinheit
- 22: elektrisch leitfähiges Anschlusselement
- 24: Energiespeicher
- 26: mechanisches Anschlusselement
- 28: magnetisches Anschlusselement
- 30: Datenübertragungseinheit
- 32: Unterstützungseinheit
- 34: Lebensmittelbearbeitungsgeschirrgriff
- 36: Lebensmittelbearbeitungsgeschirrdeckel
- 38: System
- 40: magnetisches Gegenanschlusselement
- 42: weitere Datenübertragungseinheit
- 44: Sendelement
- 46: Empfangselement
- 48: weiteres Sendelement
- 50: weiteres Empfangselement
- 52: Sensoreinheit
- 54: Temperatursensor
- 56: Ausgabeeinheit
- 58: äußerer Ring
- 60: weiteres Zusatzmodul
- 62: weitere Funktionseinheit
- 64: Rühreinheit
- 66: weiteres elektrisch leitfähiges Anschlusselement
- 68: weiteres mechanisches Anschlusselement
- 70: Display

## Patentansprüche

1. Zusatzmodul (10a-c), welches zur Anbringung an ein Lebensmittelbearbeitungsgeschirr (12a; 12c), insbesondere ein Gargeschirr, vorgesehen ist, mit einer Funktionseinheit (14a-c) zur Bereitstellung zumindest einer Funktion, **gekennzeichnet durch** zumindest eine Anschlusseinheit (16a-c), welche zu einem Anschluss zumindest eines weiteren Zusatzmoduls (18a-c), welches insbesondere eine weitere Funktionseinheit (20a-c) zur Bereitstellung zumindest einer weiteren Funktion aufweist, vorgesehen ist.

2. Zusatzmodul (10a; 10c) nach Anspruch 1, **dadurch gekennzeichnet, dass** die Anschlusseinheit (16a; 16c) zumindest ein elektrisch leitfähiges Anschlusselement (22a; 22c) aufweist.

3. Zusatzmodul (10a; 10c) nach Anspruch 2, **dadurch gekennzeichnet, dass** das elektrisch leitfähige Anschlusselement (22a; 22c) zu einer Energieübertragung vorgesehen ist.

4. Zusatzmodul (10a; 10c) nach Anspruch 2 oder 3, **dadurch gekennzeichnet, dass** das elektrisch leitfähige (22a; 22c) Anschlusselement zu einer Datenübertragung vorgesehen ist.

5. Zusatzmodul (10a; 10c) nach einem der vorhergehenden Ansprüche, **dadurch gekennzeichnet, dass** die Anschlusseinheit (16a; 16c) zumindest ein mechanisches Anschlusselement (26a; 26c) zu einer mechanischen Anbindung des weiteren Zusatzmoduls (18a; 18c) aufweist.

6. Zusatzmodul (10b) nach einem der vorhergehenden Ansprüche, **dadurch gekennzeichnet, dass** die Anschlusseinheit (16b) zumindest ein magnetisches Anschlusselement (28b) zu einer magnetischen Anbindung des weiteren Zusatzmoduls (18b) aufweist.

7. Zusatzmodul (10b) nach einem der vorhergehenden Ansprüche, **gekennzeichnet durch** eine Datenübertragungseinheit (30b) zu einer drahtlosen Datenübertragung mit dem zumindest einen weiteren Zusatzmodul (18b).

8. Zusatzmodul (10a; 10c) nach einem der vorhergehenden Ansprüche, **dadurch gekennzeichnet, dass** die Funktionseinheit (14a; 14c) als eine Unterstützungseinheit (32a; 32c) zu einer Unterstützung des zumindest einen weiteren Zusatzmoduls (18a; 18c) ausgebildet ist.

9. Zusatzmodul (10a) nach einem der vorhergehenden Ansprüche, welches in einem Lebensmittelbearbeitungsgeschirrgriff (34a), insbesondere einem Gargeschirrgriff, integriert ist.

10. Zusatzmodul (10c) nach einem der Ansprüche 1 bis 8, welches in einem Lebensmittelbearbeitungsgeschirrdeckel (36c), insbesondere einem Gargeschirrdeckel, integriert ist.

11. System (38a; 38c) mit einem Zusatzmodul (10a; 10c) nach einem der vorhergehenden Ansprüche und mit dem weiteren Zusatzmodul (18a; 18c), welches eine weitere Funktionseinheit (20a; 20c) zur Bereitstellung zumindest einer weiteren Funktion aufweist.

12. System (38a) nach Anspruch 11, **gekennzeichnet durch** das Lebensmittelbearbeitungsgeschirr (12a), an welchem zumindest das Zusatzmodul (10a) befestigt ist.
